# EUROPEAN PATENT APPLICATION

(11) **EP 2 508 963 A1**
(43) Date of publication of application: **10.10.2012**
(21) Application number: 11161770.0
(22) Date of filing: 08.04.2011
(51) Int. Cl.: G06F 3/01, G06F 3/048

(54) **Tactile feedback method and apparatus**

(71) Applicant: Research In Motion Limited, Waterloo, ON N2L 3W8 (CA)
(72) Inventor: Madabusi Srinivasan, Prasad Venkatesh, Irving, TX 75039 (US)
(74) Representative: Roberts, Gwilym Vaughan

(57) **Abstract**

A method includes displaying a representation of a navigation device on a touch-sensitive display of an electronic device, detecting movement of a touch on the touch-sensitive display, and utilizing an actuator to provide a first tactile feedback when a location of the touch is associated with the representation and a second tactile feedback when the location of the touch is not associated with the representation.

## Description

### Field of Technology

The present disclosure relates to electronic devices, including but not limited to, portable electronic devices having touch-sensitive displays and their control.

### Background

Electronic devices, including portable electronic devices, have gained widespread use and may provide a variety of functions including, for example, telephonic, electronic messaging and other personal information manager (PIM) application functions. Portable electronic devices include, for example, several types of mobile stations such as simple cellular telephones, smart telephones, wireless personal digital assistants (PDAs), and laptop computers with wireless 802.11 or Bluetooth capabilities.

Portable electronic devices such as PDAs or smart telephones are generally intended for handheld use and ease of portability. Smaller devices are generally desirable for portability. A touch-sensitive display, also known as a touchscreen display, is particularly useful on handheld devices, which are small and have limited space for user input and output. The information displayed on the touch-sensitive displays may be modified depending on the functions and operations being performed. With continued demand for decreased size of portable electronic devices, touch-sensitive displays continue to decrease in size. Improvements in devices with touch-sensitive displays are desirable.

### Summary

A method includes displaying a representation of a navigation device on a touch-sensitive display of an electronic device, detecting movement of a touch on the touch-sensitive display, and utilizing an actuator to provide a first tactile feedback when a location of the touch is associated with the representation and a second tactile feedback when the location of the touch is not associated with the representation, to simulate the navigation device. A portable electronic device includes a touch-sensitive display, a tactile feedback apparatus operably coupled to the touch-sensitive device, a processor operably coupled to the touch-sensitive device and the tactile feedback apparatus and configured to display a representation of a navigation device on the touch-sensitive display, detect movement of a touch on the touch-sensitive display, and provide a first tactile feedback when a location of the touch is associated with the representation and a second tactile feedback when the location of the touch is not associated with the representation.

### Brief Description of the Drawings

FIG. 1 is a block diagram of a portable electronic device in accordance with the disclosure.

FIG. 2 is a sectional side view of a portable electronic device with piezoelectric actuators in accordance with the disclosure.

FIG. 3 is a sectional side view of a portable electronic device with a depressed touch-sensitive display in accordance with the disclosure.

FIG. 4 is a sectional side view of a piezoelectric actuator in accordance with the disclosure.

FIG. 5 is a sectional side view of a piezoelectric actuator with a force sensor in accordance with the disclosure.

FIG. 6 is a block diagram including force sensors and actuators of the portable electronic device in accordance with the disclosure.

FIG. 7 is a flowchart illustrating a method of providing tactile feedback in accordance with the disclosure.

FIG. 8 is a front view of a portable electronic device with a navigation device displayed on the touch-sensitive display in accordance with the disclosure.

FIG. 9 shows a graph of tactile feedback in accordance with the disclosure.

FIG. 10 shows a graph of vibration that provides tactile feedback in accordance with the disclosure.

### Detailed Description

The following describes an apparatus for and method that includes displaying a representation of a navigation device on a touch-sensitive display of an electronic device, detecting movement of a touch on the touch-sensitive display, and utilizing an actuator to provide a first tactile feedback when a location of the touch is associated with the representation and a second tactile feedback when the location of the touch is not associated with the representation, to simulate the navigation device.

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

The disclosure generally relates to an electronic device, which is a portable electronic device in the embodiments described herein. Examples of portable electronic devices include mobile, or handheld, wireless communication devices such as pagers, cellular phones, cellular smart-phones, wireless organizers, personal digital assistants, wirelessly enabled notebook computers, tablet computers, and so forth. The portable electronic device may also be a portable electronic device without wireless communication capabilities, such as a handheld electronic game device, digital photograph album, digital camera, or other device.

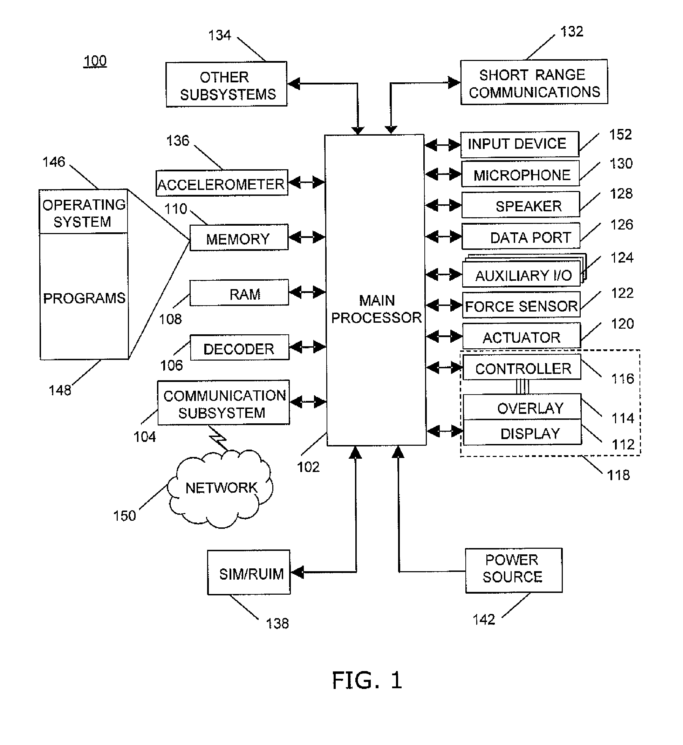

A block diagram of an example of a portable electronic device 100 is shown in FIG. 1. The portable electronic device 100 includes multiple components, such as a processor 102 that controls the overall operation of the portable electronic device 100. Communication functions, including data and voice communications, are performed through a communication subsystem 104. Data received by the portable electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and networks that support both voice and data communications. A power source 142, such as one or more rechargeable batteries or a port to an external power supply, powers the portable electronic device 100.

The processor 102 interacts with other components, such as Random Access Memory (RAM) 108, memory 110, a display 112 with a touch-sensitive overlay 114 operably coupled to an electronic controller 116 that together comprise a touch-sensitive display 118, one or more actuators 120, one or more force sensors 122, an auxiliary input/output (I/O) subsystem 124, a data port 126, a speaker 128, a microphone 130, short-range communications 132, and other device subsystems 134. User-interaction with a graphical user interface is performed through the touch-sensitive overlay 114. The processor 102 interacts with the touch-sensitive overlay 114 via the electronic controller 116. Information, such as text, characters, symbols, images, icons, and other items that may be displayed or rendered on a portable electronic device, is displayed on the touch-sensitive display 118 via the processor 102. The processor 102 may interact with an accelerometer 136 that may be utilized to detect direction of gravitational forces or gravity-induced reaction forces.

To identify a subscriber for network access, the portable electronic device 100 uses a Subscriber Identity Module or a Removable User Identity Module (SIM/RUIM) card 138 for communication with a network, such as the wireless network 150. Alternatively, user identification information may be programmed into memory 110.

The portable electronic device 100 includes an operating system 146 and software programs or components 148 that are executed by the processor 102 and are typically stored in a persistent, updatable store such as the memory 110. Additional applications or programs may be loaded onto the portable electronic device 100 through the wireless network 150, the auxiliary I/O subsystem 124, the data port 126, the short-range communications subsystem 132, or any other suitable subsystem 134.

A received signal, such as a text message, an e-mail message, or web page download, is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104. For voice communications, the overall operation of the portable electronic device 100 is similar. The speaker 128 outputs audible information converted from electrical signals, and the microphone 130 converts audible information into electrical signals for processing.

The touch-sensitive display 118 may be any suitable touch-sensitive display, such as a capacitive, resistive, infrared, surface acoustic wave (SAW) touch-sensitive display, strain gauge, optical imaging, dispersive signal technology, acoustic pulse recognition, and so forth, as known in the art. A capacitive touch-sensitive display includes a capacitive touch-sensitive overlay 114. The overlay 114 may be an assembly of multiple layers in a stack including, for example, a substrate, a ground shield layer, a barrier layer, one or more capacitive touch sensor layers separated by a substrate or other barrier, and a cover. The capacitive touch sensor layers may be any suitable material, such as patterned indium tin oxide (ITO).

One or more touches, also known as touch contacts or touch events, may be detected by the touch-sensitive display 118. The processor 102 may determine attributes of the touch, including a location of a touch. Touch location data may include an area of contact or a single point of contact, such as a point at or near a center of the area of contact. A signal is provided to the controller 116 in response to detection of a touch. A touch may be detected from any input member, such as a finger, thumb, appendage, or other items, for example, a stylus, pen, or other pointer, depending on the nature of the touch-sensitive display 118. The controller 116 and/or the processor 102 may detect a touch by any suitable input member on the touch-sensitive display 118. Multiple simultaneous touches may be detected. Movement of a touch may be detected by the touch-sensitive display 118.

One or more gestures may also be detected by the touch-sensitive display 118. A gesture, such as a swipe, also known as a flick, is a particular type of touch on a touch-sensitive display 118 and may begin at an origin point and continue to an end point. A gesture may be identified by attributes of the gesture, including the origin point, the end point, the distance traveled, the duration, the velocity, and the direction, for example. A gesture may be long or short in distance and/or duration. Two points of the gesture may be utilized to determine a direction of the gesture.

The actuator(s) 120 may be depressed by applying sufficient force to the touch-sensitive display 118 to overcome the actuation force of the actuator 120. The actuator 120 may be actuated by pressing anywhere on the touch-sensitive display 118. The actuator 120 may provide input to the processor 102 when actuated. Actuation of the actuator 120 may result in provision of tactile feedback. Other different types of actuators 120 may be utilized than those described herein. When force is applied, the touch-sensitive display 118 is depressible, pivotable, and/or movable. Tactile, or haptic, feedback may be provided by apparatus such as one or more actuators 120, such as piezoelectric devices, vibrator motors also known as vibramotors, ultrasonic devices, or other suitable apparatus.

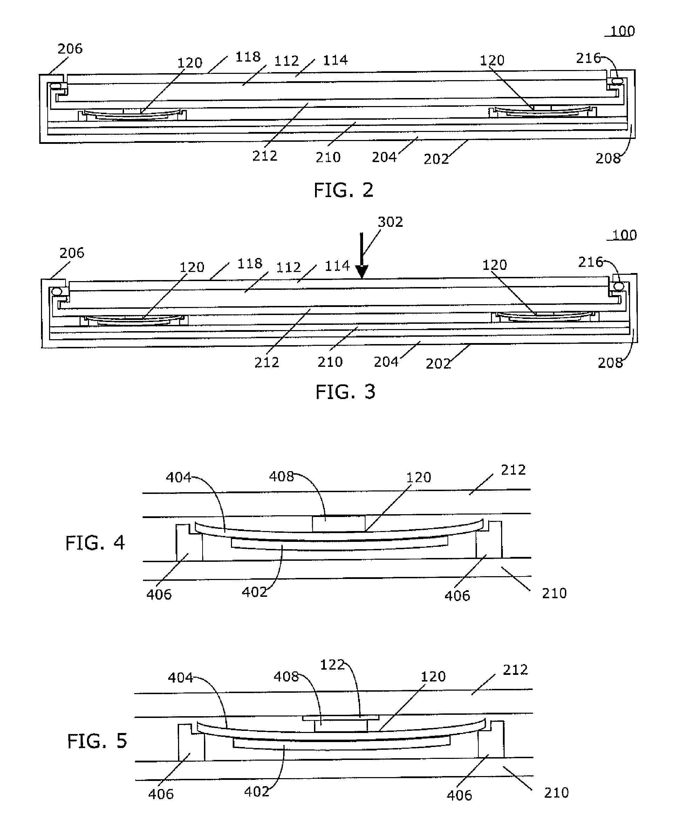

A cross section of a portable electronic device 100 taken through the centers of piezoelectric ("piezo") actuators 120 is shown in FIG. 2. The portable electronic device 100 includes a housing 202 that encloses components such as shown in FIG. 1. The housing 202 may include a back 204, sidewalls 208, and a frame 206 that houses the touch-sensitive display 118. A base 210 extends between the sidewalls 208, generally parallel to the back 204, and supports the actuators 120. The display 112 and the overlay 114 are supported on a support tray 212 of suitable material, such as magnesium. Optional spacers 216 may be located between the support tray 212 and the frame 206, may advantageously be flexible, and may also be compliant or compressible, and may comprise gel pads, spring elements such as leaf springs, foam, and so forth.

The touch-sensitive display 118 is moveable and depressible with respect to the housing 202. A force 302 applied to the touch-sensitive display 118 moves, or depresses, the touch-sensitive display 118 toward the base 210. When sufficient force is applied, the actuator 120 is depressed or actuated as shown in FIG. 3. The touch-sensitive display 118 may also pivot within the housing to depress the actuator 120. The actuators 120 may be actuated by pressing anywhere on the touch-sensitive display 118. The processor 102 receives a signal when the actuator 120 is depressed or actuated.

A cross section taken through the center of a piezo actuator 120 is shown in FIG. 4. The actuator 120 may comprise one or more piezo devices or elements 402. The piezo actuator 120 is shown disposed between the base 210 and the touch-sensitive display 118. The piezo actuator 120 includes a piezoelectric element 402, such as a piezoelectric ceramic disk, fastened to a substrate 404, for example, by adhesive, lamination, laser welding, and/or by other suitable fastening method or device. The piezoelectric material may be lead zirconate titanate or any other suitable material. Although the piezo element 402 is a ceramic disk in this example, the piezoelectric material may have any suitable shape and geometrical features, for example a non-constant thickness, chosen to meet desired specifications.

The substrate 404, which may also be referred to as a shim, may be comprised of a metal, such as nickel, or any other suitable material such as, for example, stainless steel, brass, and so forth. The substrate 404 bends when the piezo element 402 contracts diametrically, as a result of build up of charge at the piezo element 402 or in response to a force, such as an external force applied to the touch-sensitive display 118.

The substrate 404 and piezo element 402 may be suspended or disposed on a support 406 such as a ring-shaped frame for supporting the piezo element 402 while permitting flexing of the piezo actuator 120 as shown in FIG. 4. The supports 406 may be disposed on the base 210 or may be part of or integrated with the base 210, which may be a printed circuit board. Optionally, the substrate 404 may rest on the base 210, and each actuator 120 may be disposed, suspended, or preloaded in an opening in the base 210. The actuator 120 is not fastened to the support 406 or the base 210 in these embodiments. The actuator 120 may optionally be fastened to the support 406 through any suitable method, such as adhesive or other bonding methods.

A pad 408 may be disposed between the piezo actuator 120 and the touch-sensitive display 118. The pad 408 in the present example is a compressible element that may provide at least minimal shock-absorbing or buffering protection and may comprise suitable material, such as a hard rubber, silicone, and/or polyester, and/or other materials. The pad 408 is advantageously flexible and resilient and may provide a bumper or cushion for the piezo actuator 120 as well as facilitate actuation of the piezo actuator 120 and/or one or more force sensors 122 that may be disposed between the piezo actuators 120 and the touch-sensitive display 118. When the touch-sensitive display 118 is depressed, the force sensor 122 generates a force signal that is received and interpreted by the microprocessor 102. The pad 408 may be advantageously aligned with an optional force sensor 122 to facilitate the transfer or focus of forces exerted on the touch-sensitive display 118 onto the force sensors 122. The pads 408 transfer forces between the touch-sensitive display 118 and the actuators 120 whether the force sensors 122 are above or below the pads 408. The pads 408 facilitate provision of tactile feedback from the actuators 120 to the touch-sensitive display 118 without substantially dampening the force applied to or on the touch-sensitive display 118.

The optional force sensor 122 may be disposed between the piezo actuator 120 and the touch-sensitive display 118 as shown in FIG. 5. The force sensor 122 may be disposed between the touch-sensitive display 118 and the pad 408 or between the pad and the piezo actuator 120, to name a few examples. The force sensors 122 may be force-sensitive resistors, strain gauges, piezoelectric or piezoresistive devices, pressure sensors, quantum tunneling composites, force-sensitive switches, or other suitable devices. Force as utilized throughout the specification, including the claims, refers to force measurements, estimates, and/or calculations, such as pressure, deformation, stress, strain, force density, force-area relationships, thrust, torque, and other effects that include force or related quantities. A piezoelectric device, which may be the piezo element 402, may be utilized as a force sensor.

Force information related to a detected touch may be utilized to select information, such as information associated with a location of a touch. For example, a touch that does not meet a force threshold may highlight a selection option, whereas a touch that meets a force threshold may select or input that selection option. A value meets a threshold when the value is at or beyond the threshold. The input of the selection option is typically processed by the processor 102. The force threshold may be determined by a force sensor, by a force that actuates an actuator, or other force determination device. Selection options include, for example, displayed or virtual keys of a keyboard; selection boxes or windows, e.g., "cancel," "delete," or "unlock"; function buttons, such as play or stop on a music player; icons, representing applications or other features, and so forth. Different magnitudes of force may be associated with different functions or input. For example, a lesser force may result in panning, and a higher force may result in zooming.

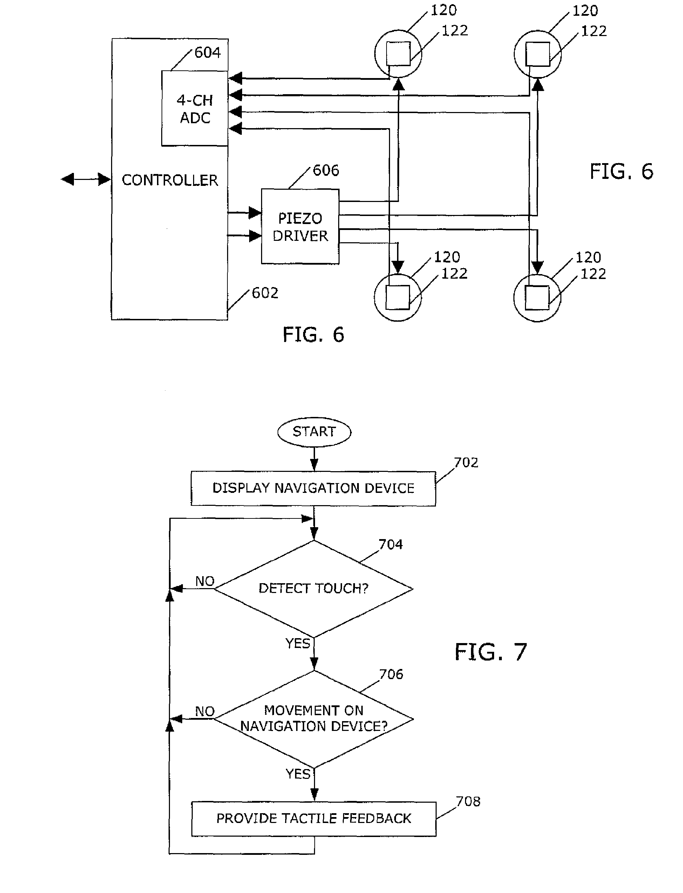

A block diagram including force sensors and actuators of the portable electronic device 100 is shown in FIG. 6. In this example, each force sensor 122 is electrically coupled to a controller 602, which includes an amplifier and analog-to-digital converter (ADC) 604. Each force sensor 122 may be, for example, a force-sensing resistor wherein the resistance changes as force applied to the force sensor 122 changes. As applied force on the touch-sensitive display 118 increases, the resistance decreases. This change is determined via the controller 116 for each of the force sensors 122, and a value representative of the force at each of the force sensors 122 may be determined.

The piezo actuators 120 are electrically coupled to a piezo driver 604 that communicates with the controller 602. The controller 602 is also in communication with the main processor 102 of the electronic device 100 and may exchange signals with the main processor 102. The piezo actuators 120 and the force sensors 122 are operatively coupled to the main processor 102 via the controller 602. The controller 602 controls the piezo driver 606 that controls the current/voltage to the piezoelectric devices 402 of the actuator 120, and thus the controller 602 controls the force applied by the piezo actuators 120 on the touch-sensitive display 118. The piezoelectric devices 402 may be controlled individually via a separate control line between each actuator 120 and the controller 602. Different signals may be sent to each different actuator 120. Alternatively, the piezoelectric devices 402 may be controlled substantially equally and concurrently, for example, by the same signal that may be provided through a common control line that extends to each actuator 120 or by individual control lines such as shown in FIG. 6.

The tactile feeling of switches, actuators, keys, other physical objects, textures, and so forth may be simulated, or a non-simulated tactile feedback may be provided by controlling the piezoelectric devices 402. For example, when a force applied on the touch-sensitive display 118 exceeds a depression threshold, a signal is identified and the voltage/charge at the piezo actuators 120 is applied according to the signal such that the piezo actuator 120 imparts a force on the touch-sensitive display 118, which force may, for example, simulate depression of a dome switch. When the force applied to the touch-sensitive display 118 falls below a release threshold, the voltage/charge at the piezo actuators 120 is modified such that the piezo actuator 120 imparts a force or discontinues imparting a force on the touch-sensitive display 118, which may, for example, simulate release of a dome switch.

The actuators 120 may vibrate the touch-sensitive display 118 in opposing directions, e.g., in the z direction or up and down from the perspective of any of FIG. 2 through FIG. 5. Alternatively, the actuators may vibrate the touch-sensitive display 118 by vibrating the touch-sensitive display 118 in directions other than perpendicular to the touch-sensitive display 118. The vibration may be varied by varying one or more parameters of the vibration, such as amplitude or magnitude, frequency, and duration. The touch-sensitive display 118 vibrates while the housing 202 remains relatively stationary, i.e., the housing 202 is not directly vibrated. Although the tactile feedback is provided to the touch-sensitive display 118, less intense feedback may be felt along the housing 202. The touch-sensitive display 118 may be vibrated at one or more frequencies. The touch-sensitive display 118 may be vibrated at multiple frequencies, for example, vibrating at one frequency for one time period followed by vibrating at another frequency for another period. The actuators 120 may be controlled to vibrate over various or varied distances. The actuators 120 may be controlled to vibrate the touch-sensitive display 118 across a varying frequency sweep, for example, from one frequency to another frequency and back to the original frequency. Vibrations may be provided at various frequencies and across various frequency ranges. Other tactile feedback, such as pulses, clicks, or pops, may be provided by the piezo actuators 120.

The processor 102 generates and provides an actuation signal to the actuators 120 to provide tactile feedback to the touch-sensitive display 118. The actuation signal may be generated and tactile feedback may be provided in response to detected input from the touch-sensitive display 118, in response to receiving a wireless communication, or to facilitate finding, touching, and selecting selection options. The actuation signal includes tactile feedback information, such as frequency, duration, and amplitude, magnitude, or intensity of feedback information for the actuators 120. The actuation signal may be based at least in part on the force or the force signal provided by the force sensors 122. The intensity of the feedback may be varied in relation to the amount of the applied force. The actuation signal provides information and/or instructions for how the actuators 120 provide tactile feedback, e.g., how the actuators 120 move the touch-sensitive display 118. The piezo actuators 120 move the touch-sensitive display relative to the housing 202 to provide the tactile feedback. For example, the piezo actuators 120 may move the touch-sensitive display 118 in opposing directions, e.g., in each z direction or up and down from the perspective of FIG. 3, resulting in vibration of the touch-sensitive display 118. The touch-sensitive display 118 may move in an inward direction with respect to the housing 202, i.e., in a direction toward the base 210 or back 204 of the housing 202. The touch-sensitive display 118 may also move in an outward direction with respect to the housing 202, i.e., in a direction away from the base 210 or back 204 of the housing 202. In another example, the provision of tactile feedback may result in a single movement of the touch-sensitive display 118, such as a single pulse or click. The tactile feedback may have different characteristics, for example, vibrations and pulses or clicks, individually or in combination, and may simulate various different perceptible tactile sensations.

The actuators 120 are controlled to provide different tactile feedback. The amplitude and/or frequency of the vibration may be selected to cause a particular sensation when a user touches the touch-sensitive display 118. For example, varying the amplitude and/or frequency of vibration may vary the resistance to movement of a touch along the touch-sensitive display. Thus, tactile feedback may include a low friction effect or a high friction effect. Such resistance is generally related to a coefficient of friction of a touch along the touch-sensitive display 118. For example, increasing the frequency of vibration reduces the resistance to movement of a touch along the touch-sensitive display 118, thus a touch more easily slides along the touch-sensitive display 118. Decreasing the frequency of vibration increases the resistance to movement of a touch along the touch-sensitive display 118, thus a touch slides with more difficulty along the touch-sensitive display 118. When the touch-sensitive display 118 is not vibrated, the resistance to movement along the touch-sensitive display 118 is highest. Varying the amplitude and/or duration of the vibration causes similar effects to resistance to movement along the touch-sensitive display 118. For example, reducing the amplitude and increasing the duration, i.e., time vibrated compared to time not vibrated, of the vibration reduces resistance to movement along the touch-sensitive display 118.

The frequency of vibration may be varied, for example, to vary the resistance to movement of a touch along the touch-sensitive display 118. The vibration may be varied across a range of frequencies, e.g., from no vibration to vibration in the range of from 30 kHz to 80 kHz. Any frequency ranges may be utilized depending on the capabilities of the actuators 120 and the properties of the touch-sensitive display 118. The highest frequency of vibration typically results in the least resistance to movement along the touch-sensitive display 118. Similarly, the amplitude of vibration may be varied, for example, to vary the resistance to movement of a touch along the touch-sensitive display 118. Smaller amplitudes of vibration, e.g., 3 to 5 µm, result in less resistance to movement along the touch-sensitive display 118 than larger amplitudes of vibration, e.g., 100 to 150 µm.

To reduce or inhibit audible buzzing or humming due to vibration of the touch-sensitive display 118, the frequency of the vibration may be set to a frequency above the audible range of a user, e.g., above 20 kHz. Setting the vibration to a frequency at or near the resonant frequency of the touch-sensitive display 118, for example 30 kHz, results in more efficient vibration, resulting in more efficient battery usage for the portable electronic device 100. Different touch-sensitive displays 118 and different portable electronic devices may have different resonant frequencies. Resonant frequency determination may take into account engagement of an input member, e.g., a finger or stylus. Other frequencies may be utilized.

A flowchart illustrating a method of providing tactile feedback for a touch-sensitive display of a portable electronic device is shown in FIG. 7. The method may be carried out by software executed, for example, by the processor 102. Coding of software for carrying out such a method is within the scope of a person of ordinary skill in the art given the present description. The method may contain additional or fewer processes than shown and/or described, and may be performed in a different order. Computer-readable code executable by at least one processor of the portable electronic device to perform the method may be stored in a computer-readable medium.

A representation of a navigation device is displayed 702. For example, the navigation device may be displayed in a home screen, or any suitable application, such as email, text messaging, calendar, tasks, address book, Webpage, word processing, media, or any other suitable application for navigation of a cursor, highlighter, or other indicator on the touch-sensitive display 118. The image of the navigation device is displayed. For example, an image of a trackball or roller wheel may be displayed.

When a touch that is associated with the navigation device is detected 704, the process continues at 706. The touch may be, for example, a tap, a hover, a swipe, or any other gesture. The touch may be associated with the navigation device when the touch is on or near the navigation device. When movement of the touch is detected 706, tactile feedback is provided 708. Tactile feedback may generally be provided by an actuation signal provided to the actuators 120. The actuation signal may be generated, for example, to simulate the feel of a physical navigation device. Tactile feedback may also be provided by not actuating the actuators 120, for example, when the touch is not associated with the navigation device.

The navigation device that is displayed may be, for example, a trackball, and the tactile feedback may be utilized to simulate resistance to movement during movement of the input member to roll the displayed image of the trackball. The tactile feedback may simulate resistance to movement of the touch by vibration utilizing the actuators 120. The resistance to movement of a touch moving along the trackball may be lower than the resistance to movement of a touch that is not associated with the trackball. Vibration may be provided at suitable frequency and amplitude to reduce the resistance to movement of a touch along the touch-sensitive display. When the touch is not associated with the navigation device, the actuators 120 are not actuated to reduce the resistance to movement, thereby providing different tactile feedback when the touch is moving along an area associated with the trackball than when the touch is moving along an area that is not associated with the trackball. Alternatively, the resistance to movement may be higher on the trackball than on the area around, surrounding, or adjacent to the trackball

According to another example, tactile feedback may be utilized to simulate the feel of a trackball protruding from the surface of the touch-sensitive display 118. For example, the screen may be moved to provide tactile feedback when the input member is associated with an edge of the trackball displayed on the touch-sensitive display 118. An electrical value of the piezo actuators 120 may be determined based on the touch location. The electrical value may be, for example, a voltage, current, or charge associated with the piezo actuators 120. The electrical value, e.g., voltage/current/charge, is based on the touch location and may be determined utilizing, for example, a look-up table, equation, or any other suitable method of associating the electrical value with locations on the touch-sensitive display 118. The electrical value is utilized to change the distance between the touch-sensitive display 118 and the base 210 of the portable electronic device 100 by changing the force applied by the piezo actuators 120 on the touch-sensitive display 118, for example, as a touch moves from a location that is not associated with the trackball to a location that is associated with the trackball, thereby providing different tactile feedback when the touch moves along an area associated with the trackball than when the touch moves along an area that is not associated with the trackball. Tactile feedback may change as the touch moves from a location that is associated with the trackball to a location that is not associated with the trackball. Tactile feedback may also change as a touch moves over an area associated with the trackball on the touch-sensitive display 118 as the distance between the touch-sensitive display 118 and the base 210 may be changed to simulate a contoured surface.

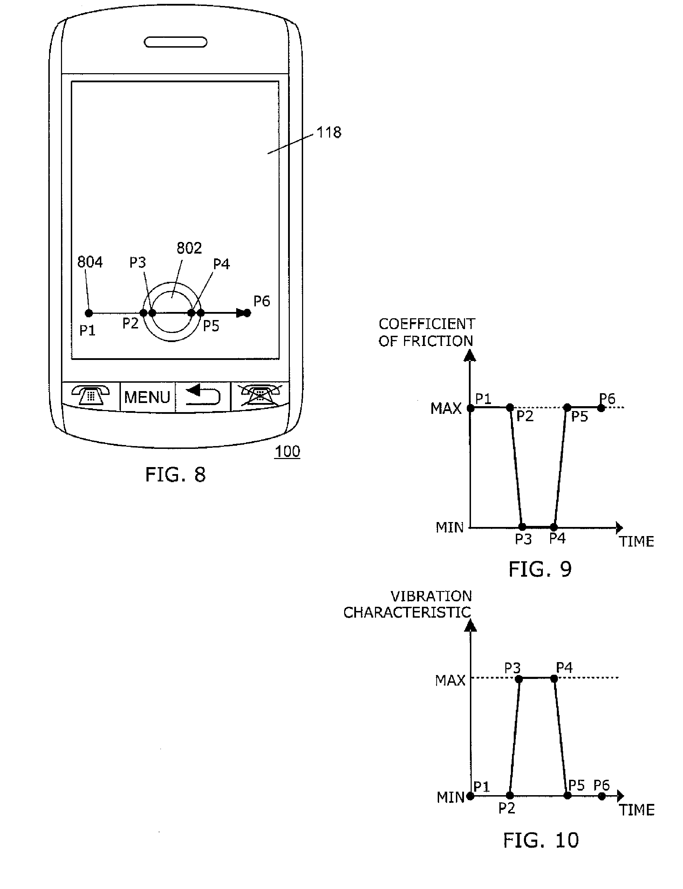

A front view of a portable electronic device shown with a navigation device is illustrated in FIG. 8. In the example of FIG. 8, the navigation device comprises a displayed image of a trackball 802. The path of a touch 804 starts at P1 and continues to P6, as the virtual trackball 802 is utilized, for example, to scroll displayed information from left to right.

Graphs of tactile feedback are shown in FIG. 9 and FIG. 10. FIG. 9 illustrates an example of coefficient of friction or resistance to movement by a touch along the touch-sensitive display 118. FIG. 10 illustrates an example of vibration amplitude or frequency of the tactile feedback. The example graphs are correlated to the points P1 through P6 along the path 804 of the touch of FIG. 8.

The touch event begins at P1, where the actuators 120 are not actuated and the coefficient of friction or resistance to movement is equal to the coefficient of friction or resistance to movement of the touch-sensitive display 118. Vibration may begin when the touch reaches P2 and the frequency of vibration may be varied between P2 and P3, from a minimum at P2 to a maximum frequency at P3, which may be from 0 kHz to 80 kHz, for example, as the touch moves to a location associated with the trackball 802. With the increase in frequency of vibration, the resistance to movement decreases between P2 and P3. The frequency of vibration is at the maximum value between P3 and P4 and the resistance to movement is lowest as the touch moves on the trackball 802. The frequency of vibration decreases from the maximum at P4 to the minimum at P5 as the touch moves off the trackball 802. Vibration is discontinued and the coefficient of friction is equal to the coefficient of friction of the touch-sensitive display 118 absent tactile feedback between P5 and P6. Thus, the tactile feedback between P1 and P2 differs from the tactile feedback between P3 and P4, for example. Operation of the device 100 need not strictly be maintained between a minimum and maximum for a range, e.g., operation may not reach the minimum or maximum of the range.

The distance between the base 210 and the touch-sensitive display 118 may also be adjusted between P3 and P4, thereby changing the distance between the back 204 of the housing 202 and the touch-sensitive display 118 to provide the tactile feel of a contoured surface.

The tactile feedback may be adjusted to accommodate for force of the touch. For example, the frequency of vibration may be increased to reduce the resistance to movement along the touch-sensitive display 118 to facilitate ease of operation when more forceful or less forceful touches are utilized.

Tactile feedback may be utilized to simulate the tactile feel of a navigation device on the touch-sensitive display. This provision of tactile feedback facilitates location of the navigation device, decreasing the time for user-interaction. Such tactile feedback may facilitate use by visually impaired persons and/or facilitate use without looking at the touch-sensitive display. By simulating the feel of a navigation device, the user experience is more closely tied to a physical navigation device. Better control may be provided because a more familiar feel is provided when touching the image of the navigation device and the area nearby the image.

A method includes displaying a representation of a navigation device on a touch-sensitive display of an electronic device, detecting movement of a touch on the touch-sensitive display, and utilizing an actuator to provide a first tactile feedback when a location of the touch is associated with the representation and a second tactile feedback when the location of the touch is not associated with the representation.

A portable electronic device includes a touch-sensitive display, a tactile feedback apparatus operably coupled to the touch-sensitive device, a processor operably coupled to the touch-sensitive device and the tactile feedback apparatus and configured to display a representation of a navigation device on the touch-sensitive display, detect movement of a touch on the touch-sensitive display, and provide a first tactile feedback when a location of the touch is associated with the representation and a second tactile feedback when the location of the touch is not associated with the representation.

The present disclosure may be embodied in other specific forms without departing from its spirit or essential characteristics. The described embodiments are to be considered in all respects only as illustrative and not restrictive. The scope of the disclosure is, therefore, indicated by the appended claims rather than by the foregoing description. All changes that come within the meaning and range of equivalency of the claims are to be embraced within their scope.

## Claims

1. A method comprising:
displaying a representation of a navigation device on a touch-sensitive display of an electronic device;
detecting movement of a touch on the touch-sensitive display;
utilizing an actuator to provide a first tactile feedback when the touch is associated with the representation and a second tactile feedback when the touch is not associated with the representation.

2. The method according to claim 1, wherein utilizing the actuator comprises actuating the actuator to change resistance to the movement of the touch on the touch-sensitive display when a location of the touch is associated with the representation.

3. The method according to claim 1, wherein the navigation device comprises a trackball and wherein utilizing the actuator comprises actuating the actuator to simulate a shape of the trackball.

4. The method according to claim 1, wherein the first tactile feedback comprises a lower resistance to the movement and the second tactile feedback comprises a higher resistance to the movement.

5. The method according to claim 1, wherein the actuator is utilized to simulate resistance to movement during rolling of a trackball.

6. The method according to claim 1, wherein utilizing an actuator comprises actuating an actuator when a location of the touch is associated with the representation.

7. The method according to claim 1, wherein utilizing the actuator comprises actuating the actuator to change a distance between the touch-sensitive display and a back of a housing when a location of the touch is associated with the representation.

8. A computer-readable medium having computer-readable code executable by at least one processor of the portable electronic device to perform the method of claim 1.

9. A portable electronic device comprising:
a touch-sensitive display;
a tactile feedback apparatus operably coupled to the touch-sensitive device;
a processor operably coupled to the touch-sensitive device and the tactile feedback apparatus and configured to:
display a representation of a navigation device on the touch-sensitive display;
detect movement of a touch on the touch-sensitive display;
provide a first tactile feedback when the touch is associated with the representation and a second tactile feedback when the touch is not associated with the representation.

10. The electronic device according to claim 9, wherein the tactile feedback apparatus comprises an actuator that is actuated to change resistance to the movement of the touch on the touch-sensitive display when a location of the touch is associated with the representation to provide the first tactile feedback.

11. The electronic device according to claim 9, wherein the navigation device comprises a trackball and wherein the tactile feedback apparatus comprises an actuator that is actuated to change a distance between the touch-sensitive display and a back of a housing to simulate a shape of the trackball.

12. The electronic device according to claim 9, wherein the first tactile feedback comprises a lower resistance to the movement and the second tactile feedback comprises a higher resistance to the movement.

13. The electronic device according to claim 9, wherein the navigation device comprises a trackball and the tactile feedback apparatus comprises an actuator that is utilized to simulate resistance to movement during rolling of the trackball.

14. The electronic device according to claim 9, wherein the tactile feedback apparatus comprises an actuator that is actuated when a location of the touch is associated with the representation to provide the first tactile feedback.

15. The electronic device according to claim 9, wherein the first tactile feedback and the second tactile feedback comprise different distances between the touch-sensitive display and a back of the device.

## Amended claims

### Amended claims in accordance with Rule 137(2) EPC.

**1.** A method comprising:
displaying a representation of a navigation device on a touch-sensitive display of an electronic device;
detecting movement of a touch on the touch-sensitive display;
utilizing an actuator to provide a first resistance to the movement of the touch on the touch-sensitive display and a first distance between the touch-sensitive display and the back of a housing of the electronic device when the touch is associated with the representation to simulate the feel of a physical navigation device;
utilizing the actuator to provide a second resistance to the movement of the touch and a second distance between the touch-sensitive display and the back of the housing when the touch is not associated with the representation.

**2.** The method according to claim 1, wherein the navigation device comprises a trackball and wherein utilizing the actuator comprises actuating the actuator to simulate a shape of the trackball when the touch is associated with the representation.

**3.** The method according to claim 1, wherein the first resistance to the movement comprises a lower resistance to the movement than the second resistance to the movement.

**4.** The method according to claim 1, wherein the first resistance to the movement simulates resistance to movement during rolling of a trackball.

**5.** The method according to claim 1, wherein utilizing the actuator comprises actuating the actuator only when a location of the touch is associated with the representation.

**6.** A computer-readable medium having computer-readable code executable by at least one processor of the portable electronic device to perform the method of claim 1.

**7.** A portable electronic device comprising:
a housing;
a touch-sensitive display;
an actuator operably coupled to the touch-sensitive device;
a processor operably coupled to the touch-sensitive device and the actuator and configured to:
display a representation of a navigation device on the touch-sensitive display;
detect movement of a touch on the touch-sensitive display;
provide a first resistance to the movement of the touch on the touch-sensitive display and a first distance between the touch-sensitive display and the back of the housing when the touch is associated with the representation to simulate the feel of a physical navigation device; and
provide a second resistance to the movement of the touch and a second distance between the touch-sensitive display and the back of the housing when the touch is not associated with the representation.

**8.** The electronic device according to claim 7, wherein the navigation device comprises a trackball, and wherein the first distance is provided by actuating the actuator to simulate a shape of the trackball.

**9.** The electronic device according to claim 7, wherein the first resistance to the movement comprises a lower resistance to the movement than the second resistance to the movement.

**10.** The electronic device according to claim 7, wherein the navigation device comprises a trackball and wherein the first resistance to the movement simulates resistance to movement during rolling of the trackball.

**11.** The electronic device according to claim 7, wherein the actuator is actuated only when a location of the touch is associated with the representation.

**12.** The electronic device according to claim 7, wherein the first and second distances between the touch-sensitive display and a back of the housing are different.
